# EUROPEAN PATENT APPLICATION

(11) **EP 0 785 401 A1**
(43) Date of publication of application: **23.07.1997**
(21) Application number: 97300151.4
(22) Date of filing: 13.01.1997
(51) Int. Cl.: F25D 3/00, F25D 1/00, F25D 17/02, F25B 23/00, H05K 7/20, F28D 15/00

(54) **Apparatus for controlling temperature**

(30) Priority: 11.01.1996 GB 9600542
(71) Applicant: ACTIONENERGY LIMITED, London N1 6EE (GB)
(72) Inventor: Gomez, Enrique Llorente, Colmenar Viejo, 28790 Madrid (ES)
(74) Representative: Cozens, Paul Dennis

(57) **Abstract**

Apparatus for controlling temperature within a housing comprises at least one thermal storage device (102) for maintaining a controlled temperature within the housing, a plurality of thermal transfer arrangements (100), each one for selectively transferring, using thermal transfer fluid, heat between the thermal storage device or at least one of the thermal storage devices and the external environment according to the relative temperatures of the or each such storage device and the external environment, so as to effect thermal storage in the or each such storage device, and pressure equalising pipe means (302) connecting the thermal transfer arrangements for equalising the pressure distributions of the thermal transfer fluid inside such arrangements.

## Description

This invention relates to apparatus for controlling temperature within a housing, and particularly to apparatus for the passive cooling of equipment accommodated in such a housing. The invention also relates to a housing incorporating the apparatus.

In many technical areas such as telecommunications, fibre optic systems, meteorology, transmission and data control, it is necessary to keep electric or electronic equipment at remote locations. A desert environment is one typical location. The equipment is typically kept in a purpose-built, insulated, closed ambient housing (or shelter), often in adverse weather conditions. In order to ensure a high Mean Time Between Failure for such equipment, it is necessary to maintain the equipment at a near-constant temperature, and often between certain critical temperature limits. At these remote locations, an external power supply is usually not available, and the equipment may consequently be solar-powered via photovoltaic cells. However, the power from these cells is normally insufficient to power active cooling apparatus, such as an air conditioning system. Hence passive cooling apparatus is required in order to control the temperature of the environment in the housing.

International Patent Publication No. WO94/28698, whose disclosure is incorporated herein by reference, describes a known temperature control apparatus. It comprises essentially three main components, an insulated container (housing) to resist heat transfer from the external ambient, a plurality of thermal storage devices for maintaining a controlled temperature within the housing, and a thermal transfer arrangement for each thermal storage device, for selectively transferring heat between the thermal storage device and the external environment according to the relative temperatures of the storage devices and the external environment, so as to effect thermal storage in the storage device. Each thermal storage device is separate from the other such devices. Likewise, each thermal transfer arrangement.

Each thermal storage (accumulating) device includes a thermal storage (accumulating) medium in the form of a substance which changes its phase between solid and liquid at or near the desired temperature for the environment inside the housing. The thermal storage medium inside the thermal storage device absorbs and accumulates the heat given off from the equipment housed inside the container and the heat flowing through the walls during the hotter part of the day.

Each thermal transfer arrangement comprises a conduit arranged in a closed circuit and containing a thermal transfer fluid. The conduit is arranged such that inside the housing the fluid exchanges heat with the thermal storage device; it also passes out of the housing, upwardly and over the housing, where it is arranged such that the fluid also exchanges heat with the external environment.

The thermal transfer arrangements are collectively fed by a single expansion tank.

With this known apparatus, during the part of the day when the external environment is hotter than the internal environment, no heat transfer takes place because the warmer thermal transfer fluid outside is trapped in the portion of the conduit outside the housing. However, at night time or at other times when the external environment is cooler than the internal environment, the colder fluid outside falls under gravity into the portion of the conduit inside, and cools down and regenerates (liquid to solid) the thermal storage medium inside the thermal storage device. Hence, the thermal storage medium inside the thermal storage device is regenerated (liquid to solid) by selective heat transfer between the storage device and the external environment, the selectivity of the apparatus being reliant on the buoyancy force of natural convention of the thermal transfer fluid.

Reference should be made to International Patent Publication No. WO94/28698 for further details of this known apparatus.

Whilst the known apparatus functions satisfactorily, it has been discovered, pursuant to the present invention, that it can suffer certain problems in unfavourable circumstances.

Firstly, it has been discovered pursuant to the present invention that air bubbles may become trapped in the conduits of the thermal transfer arrangements, and that the efficiency of any arrangement which is so affected may diminish with respect to the efficiency of the remainder of the arrangements due to reduced flow of thermal transfer fluid in the affected arrangements. This can be disadvantageous.

Secondly, in normal use the static pressure is the same in each of the thermal transfer arrangements because they are each connected to the common expansion tank. However, it has now been discovered pursuant to the present invention that, if the level of the thermal transfer fluid is lower than the level of the expansion tank (for example because of a leak in the system, because of insufficient filling of the system or due to poor installation work and incorrect connection of the expansion tank to the thermal transfer arrangements), then the static pressures in the various thermal transfer arrangements can diverge from one another, due to the different fluid levels which may arise in the arrangements. This can also be disadvantageous, since again the arrangements may operate at different efficiencies.

The present invention seeks to solve the above and other problems.

According to the present invention, there is provided apparatus for controlling temperature within a housing, comprising:-
at least one thermal storage device for maintaining a controlled temperature within the housing;
a plurality of thermal transfer arrangements, each one for selectively transferring, using thermal transfer fluid, heat between the thermal storage device or at least one of the thermal storage devices and the external environment according to the relative temperatures of the or each such storage device and the external environment, so as to effect thermal storage in the or each such storage device; and
pressure equalising pipe means connecting the thermal transfer arrangements for equalising the pressure distributions of the thermal transfer fluid inside such arrangements, and preferably so as to render the arrangements structurally dependent upon each other.

By providing a pipe means affording a sealed connection between the thermal transfer arrangements for equalising the distribution of the pressures of the fluid inside the arrangements, the present invention can obviate the problems identified with the known apparatus. Firstly, by equalising the pressure distributions inside the various arrangements, the efficiency of each of them can be equalised, despite the possible presence of an air bubble in one of the arrangements. Secondly, the pipe means can also equalise the levels of fluid in the various arrangements, which can again enable an equalisation of the efficiency in the arrangements. In effect, the pipe means affords a pressure reference line also in case the expansion tank cannot provide the fluid required by a particular loop.

Furthermore, by rendering the thermal transfer arrangements structurally dependent on each other (by connecting them using the pressure equalising pipe means), additional structural integrity can be provided for the apparatus.

It will be understood that, for the present invention to function successfully, the equalisation in pressure distributions between the various thermal transfer arrangements need not be exact. It will further be understood that the pressure distribution inside a particular arrangement would typically be such that pressure would increase with depth.

As used herein, the term "thermal storage" can connote storage either of "heat" or of "cold".

Preferably, the relevant thermal transfer arrangement is adapted to cool down the or each thermal storage device.

Preferably, the pressure equalising pipe means is in the form of a manifold. It may comprise a respective "T" shaped connector connected to each thermal transfer arrangement, and a respective connecting pipe interconnecting each adjacent pair of T shaped connectors. This has been found to be a particularly simple way of putting the invention into practice, since exactly the same simple connection can be made with each of the thermal transfer arrangements, even the outer two such arrangements (if more than two are provided).

Preferably, the pressure equalising pipe means further comprises means for sealing the outermost T shaped connectors. The sealing means may comprise a valve. This can facilitate emptying of the thermal transfer fluid. It can also enable connection of a manometer to the apparatus to test for leaks.

As an alternative, instead of including T shaped pieces, the pressure equalising pipe means may take the form of a number of individual pipes directly connecting adjacent thermal transfer arrangements.

Preferably, the or each connecting pipe is threadedly engaged with its respective pair of T shaped connectors. This feature can enable the various thermal transfer arrangements to be easily disconnected one from another, for example, for maintenance purposes. For the same reason, preferably, more generally, the pressure equalising pipe means is releasably connected to the thermal transfer arrangements.

The apparatus may advantageously further include at least one expansion tank for the thermal transfer fluid and a further pipe means connecting the or each expansion tank to the thermal transfer arrangements.

Preferably, the pressure equalising pipe means and the further pipe means are located at opposing ends of the thermal transfer arrangements. By this feature, the escape of air bubbles from the affected thermal transfer arrangement can be facilitated.

Preferably, the or each thermal storage device includes a thermal storage medium comprising one or more glycols.

The present invention extends to a housing incorporating apparatus as aforesaid.

Preferably, with the housing upright, the pressure equalising pipe means is connected to the thermal transfer arrangements adjacent the lowest point on such arrangements, since at this location its pressure equalising function can be optimised.

For a similar reason, again with the housing upright, the further pipe means is preferably connected to the thermal transfer arrangements adjacent the highest point on such arrangements.

In particular, with the pressure equalising pipe means connected to the thermal transfer arrangements adjacent the lowest point on such arrangements, and the further pipe means being connected to such arrangements adjacent the highest point, and the pressure equalising and further pipe means being located substantially diametrically opposite one another, the two pipe means can, in combination with the expansion tank, function particularly efficiently together to equalise the pressure distributions in the arrangements (so that in particular the quantity of the thermal transfer fluid in each arrangement is equalised) and hence to equalise their efficiencies.

Preferred features of the invention are now described, by way of example, with reference to the accompanying drawings, in which:
Figure 1 is a schematic perspective view of apparatus according to the present invention for controlling temperature within a housing;

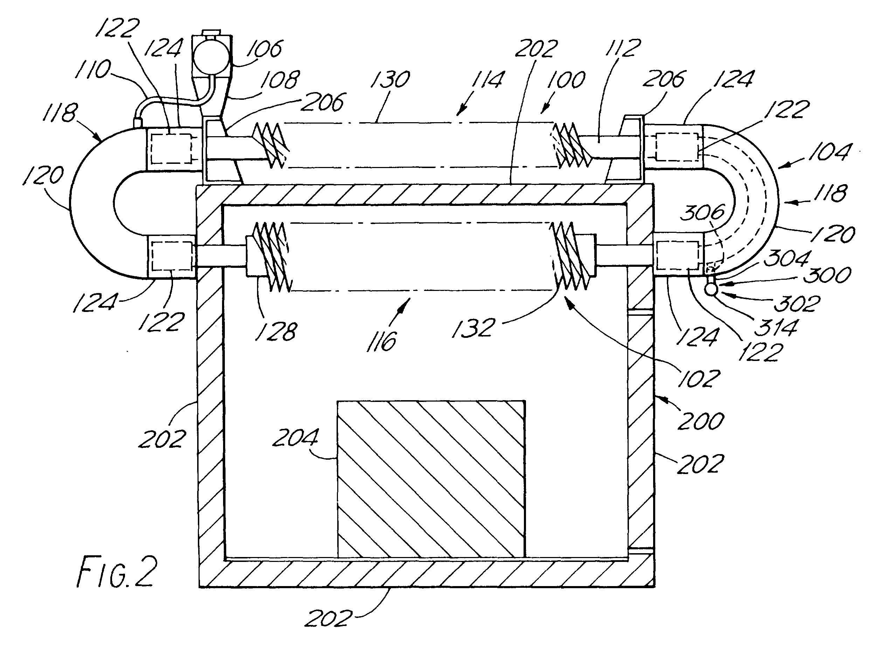

Figure 2 is a side elevational view of the apparatus shown incorporated into a housing, the housing being shown in section; and
Figure 3 is a partial view of an alternative embodiment of the apparatus.

Apparatus for controlling temperature within a housing comprises generally four individual such apparatuses, each designated as 100. It will be understood that the number of individual apparatuses provided is not critical, and is dependent mainly on the thermal performance necessary for thermal temperature control of the housing and also on the housing location itself. Each individual such apparatus includes a thermal storage device 102 and a thermal transfer arrangement 104 which carries thermal transfer fluid (not shown). In this embodiment, the thermal transfer fluid is an aqueous solution of 1,2 - diols (dihydroxyl alcohols) or the like, whilst the thermal storage device includes a thermal storage medium comprising a glycol mixture.

An expansion tank 106, in this embodiment of circular cross-section, formed by extrusion, and having a filling hole 107, is fixed onto the shelter by bracket 108. Pipes 110 lead from each individual thermal transfer arrangement 104 to the tank 106 and are releasably connected to it by means of clamps (not shown). The expansion tank compensates for the variation in volume of the thermal transfer fluid.

Apart from having a common expansion tank 106 and apart from being interconnected by pressure equalising pipes (as described later), the individual apparatuses 100 are separate. This is for ease of maintenance and to allow the number of individual apparatuses to be easily varied. In an alternative embodiment, each individual apparatus could have a separate expansion tank.

As can be seen from the figures, the control apparatus is incorporated into a closed, monolithic, box-shaped housing 200, a portion of the apparatus being inside the housing, and a portion being outside. The housing includes thermally insulated panels 202 which act as a shelter for electrical equipment 204. The panels are of a sandwich construction, the outer layers of the sandwich being aluminium or steel sheets, between which are sandwiched high density hot injected polyurethane foamed under pressure. They are held together by an aluminium or steel frame. The external part of the apparatus is retained on the housing by, amongst other means, brackets 206.

An individual control apparatus 100 is now described in more detail. The thermal transfer arrangement 104 includes a conduit 112 in the form of a single continuous loop so as to form a closed circuit. An external portion of the conduit acts as an external heat exchange device 114 for exchanging heat with the external environment, and an internal portion of the conduit acts as an internal heat exchange device 116 for exchanging heat with the thermal storage device 102 and with the internal environment.

The external and internal heat exchange devices 114 and 116 are connected together via two curved, sealed pipes 118 forming part of the conduit. The pipes are covered with insulating material 120. The pipes are releasably connected to the heat exchange devices 114 and 116 by releasable couplings 122 made of reinforced rubber, each coupling being fastened to its respective pipe and heat exchange device by two or more clamps (not shown) which in the preferred embodiment are made of steel. The couplings 122 are again covered with insulating material 124. The insulating material 124 is not of a particularly heavy grade, and hence is easily removable to expose the releasable couplings 122.

It will be apparent that the heat exchange devices 114 and 116 are easily and repeatably removable from the remainder of the control apparatus 100. This is achieved by loosening the various clamps and couplings, and removing the curved pipes 118. The external heat exchange device 114 can then be removed very easily. The internal heat exchange device 116 is configured to be easily removable by being slid lengthways to its farthest extent. Its distal end is then released from its aperture in the panel 202. The heat exchange device can then be removed by a combination of a pivotal and a sliding movement.

In the apparatus of the present invention, since the thermal transfer fluid is essentially at atmospheric pressure, the couplings 122 do not need to be able to withstand any substantial pressure. Nevertheless, to prevent any possible leakage of the thermal transfer fluid damaging the equipment 204 within the housing 200, any necessary releasable coupling is located outside the housing. There are no releasable couplings within the housing.

With the heat exchange devices of the apparatus of the present invention, no evaporator or condenser units are required, and hence the apparatus operates in a relatively simple fashion. The thermal transfer fluid does not change phase during normal operation of the apparatus, and during normal operation is maintained substantially at ambient pressure by means of the expansion tank 106, which is open to the atmosphere.

An important feature of the hydraulic circuit, constituted by the conduit 112, in which the thermal transfer fluid flows is that it is in the form of a single, smooth, continuous, roughly oval-shaped loop. As viewed from within the loop, all the components of the loop (the heat exchange devices 114 and 116 and the sealed pipes 118) are either straight or concave; there is no reverse curvature anywhere on the loop. This can ensure a satisfactory flow of thermal transfer fluid in the hydraulic circuit and can assist in the removal of air bubbles from the circuit. A further feature which can ensure satisfactory flow is that the conduit 112 is of relatively large internal diameter, to minimise hydraulic losses. In order to ensure the uni-directionality of the flow, the heat exchange devices 114 and 116 are very slightly inclined in the housing with respect to the horizonal (at an angle of perhaps 1 to 3°); alternatively the entire housing may be inclined at that same small angle.

The overall principles governing the operation of passive cooling apparatus have been described in relation to the known passive cooling apparatus. These principles also apply to the present invention. Other details of the present apparatus are as described in International Patent Publication WO94/28698, to which reference should be made. The present invention represents an improvement to the known apparatus.

Mention was made previously of two problems which may in unfavourable circumstances be encountered with the known temperature control apparatus.

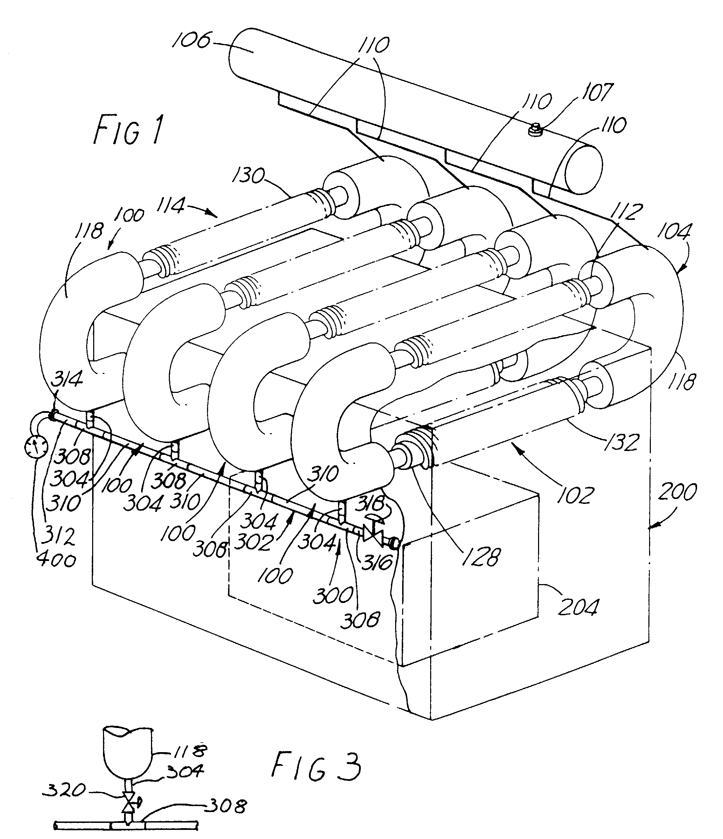

Firstly, although in normal use the static pressure is the same in each of the thermal transfer arrangements 104 because they are each connected to the common expansion tank 106, if the level of the thermal transfer fluid is lower than the base of the expansion tank (for example because of a leak in the system or because of incorrect filling of the system), then the static pressures in the various thermal transfer arrangements can diverge from one another, due to the different fluid levels which may arise in each such arrangement. For example, as can be seen most clearly in Figure 1, the fluid level may be somewhere in the pipes 110, and may of course be quite different in each different pipe, so that the static pressures would diverge from one another. This can be disadvantageous, since the arrangements may operate at different efficiencies.

Secondly, air bubbles may become trapped in the thermal transfer arrangements, and hence the efficiency of any arrangement which is so affected may diminish with respect to the efficiency of the remainder of the arrangements. This again can be disadvantageous.

One solution provided to this latter problem is to arrange that the thermal transfer arrangements (which as has been discussed above are inclined slightly to the horizontal) are arranged such that the pipes 110 are attached to the higher end of the thermal transfer arrangements, and that further the attachment is made adjacent the very highest point of the arrangements. This facilitates the escape of trapped air bubbles.

Both of the above-mentioned problems are tackled by the provision of a pressure equalising device 300, which is now described in more detail. The device comprises generally a common pressure equalising pipe means 302 affording a sealed connection between the thermal transfer arrangements at or adjacent their lowest point, preferably diametrically opposite to the points at which the expansion tank pipes 110 are connected to their respective thermal transfer arrangements. Hence the pressure distributions in each of the arrangements is equalised (usually at a pressure other than atmospheric), and hence their efficiencies are also equalised. Such an equalisation of efficiencies can be achieved even though there may be an air bubble trapped in one or more of the arrangements which may slow down the flow of thermal transfer fluid in that arrangement.

In more detail, the common pressure equalising pipe means 302 comprises four first connecting pipes 304, one each threadedly engaged with a respective threaded bush 306 attached to each thermal transfer arrangement 104 and communicating with its respective conduit 112, four "T" shaped connectors 308 threadedly engaged with respective ones of the first connecting pipes 304, three second connecting pipes 310 interconnecting the four T shaped connectors 308, a first end pipe 312 threadedly engaged with one of the T shaped connectors at one end of the pressure equalising pipe means 302 and sealed with an end cap 314 threadedly engaged therewith, a second end pipe 316 threadedly engaged with another of the T shaped connectors at the other end of the pressure equalising pipe, and an inlet/outlet valve 318 threadedly engaged with the second end pipe 316 for the filling and emptying of the thermal transfer fluid in the circuit during installation, repair or replacement of the apparatus.

The design of the pressure equalising pipe means facilitates release of one or other of the external or internal heat exchange devices 114 and 116 from the remainder of the control apparatus 100 by virtue of its threaded connections, and also facilitates removal of an individual such apparatus from the temperature control apparatus as a whole.

Furthermore, thermal transfer arrangements can be easily added or taken away at will. In the case of addition, an extra first connecting pipe, T shaped connector and second connecting pipe would need to be incorporated into the pipe means as a whole. In the case of subtraction, such components would need to be removed. Advantageously, all of the first connecting pipes will be of the same length as each other, and similarly for the second connecting pipes, so that full interoperability and interchangeability is possible.

Should regular maintenance operations be necessary, in one alternative embodiment, gate valves 320 can be introduced between pipes 304 and connectors 308, as shown, for one particular thermal transfer arrangement, in Figure 3. This can facilitate the separation of the thermal transfer arrangements.

Apart from its pressure equalising function, the pressure equalising device 300 facilitates the filling of the temperature control apparatus. For this a manometer 400 can be connected to the end of the pipe 312, replacing the end cap 314, as shown in Figure 1, whilst a low pressure air line is connected to the inlet/outlet valve 318. The valve 318 is then opened, and the manometer 400 monitored to check for any leaks in the system before filling the system with the thermal transfer fluid.

Another function of the pressure equalising pipe means, when in its assembled state, is to improve the structural strength of the apparatus.

It will be understood that the present invention has been described above purely by way of example, and modifications of detail can be made within the scope of the invention as claimed. For example, the housing 200 could be provided with, say, three instead of four individual control apparatuses, but with room being left for a fourth such apparatus to be fitted at a later time if required. It will also be understood that the number of individual control apparatuses depends mainly on the thermal performance necessary for internal temperature control of the housing and also on the housing location itself. Any number up to, say, six (or even higher) might be appropriate according to the thermal design.

Each feature disclosed in the description, and (where appropriate) the claims and drawings may be provided independently or in any appropriate combination.

## Claims

1. Apparatus for controlling temperature within a housing, comprising:-
at least one thermal storage device for maintaining a controlled temperature within the housing;
a plurality of thermal transfer arrangements, each one for selectively transferring, using thermal transfer fluid, heat between the thermal storage device or at least one of the thermal storage devices and the external environment according to the relative temperatures of the or each such storage device and the external environment, so as to effect thermal storage in the or each such storage device; and
pressure equalising pipe means connecting the thermal transfer arrangements for equalising the pressure distributions of the thermal transfer fluid inside such arrangements, and preferably so as to render the arrangements structurally dependent upon each other.

2. Apparatus according to Claim 1 wherein the thermal transfer arrangement is adapted to cool down the or each thermal storage device.

3. Apparatus according to Claim 1 or 2 wherein the pressure equalising pipe means is in the form of a manifold.

4. Apparatus according to Claim 1, 2 or 3 wherein the pressure equalising pipe means comprises a respective "T" shaped connector connected to each thermal transfer arrangement, and a respective connecting pipe interconnecting each adjacent pair of T shaped connectors.

5. Apparatus according to Claim 4 wherein the pressure equalising pipe means further comprises means for sealing the outermost T shaped connectors.

6. Apparatus according to Claim 5 wherein the sealing means comprises a valve.

7. Apparatus according to Claim 4, 5 or 6 wherein the or each connecting pipe is threadedly engaged with its respective pair of T shaped connectors.

8. Apparatus according to any of the preceding claims wherein the pressure equalising pipe means is releasably connected to the thermal transfer arrangements.

9. Apparatus according to any of the preceding claims further including at least one expansion tank for the thermal transfer fluid and a further pipe means connecting the or each expansion tank to the thermal transfer arrangements.

10. Apparatus according to Claim 9 wherein the pressure equalising pipe means and the further pipe means are located at opposing ends of the thermal transfer arrangements.

11. Apparatus according to any of the preceding claims wherein the or each thermal storage device includes a thermal storage medium comprising one or more glycols.

12. A housing incorporating apparatus according to any of the preceding claims.

13. A housing according to Claim 12 wherein, with the housing upright, the pressure equalising pipe means is connected to the thermal transfer arrangements adjacent the lowest point on such arrangements.

14. A housing according to Claim 12 or 13 when dependent on Claim 9 wherein, with the housing upright, the further pipe means is connected to the thermal transfer arrangements adjacent the highest point on such arrangements.
